(19) Europäisches Patentamt
European Patent Office
Office européen des brevets

(11) **EP 3 714 498 B1**

(12) **FASCICULE DE BREVET EUROPEEN**

(45) Date de publication et mention de la délivrance du brevet:
**13.09.2023 Bulletin 2023/37**

(21) Numéro de dépôt: **18825746.3**

(22) Date de dépôt: **19.11.2018**

(51) Classification Internationale des Brevets (IPC):
*H01M 4/13* *(2010.01)*     *H01M 4/38* *(2006.01)*
*H01M 4/62* *(2006.01)*     *H01M 10/052* *(2010.01)*
*H01M 10/0565* *(2010.01)*     *H01M 10/0568* *(2010.01)*
*H01M 4/136* *(2010.01)*     *H01M 4/40* *(2006.01)*
*H01M 4/58* *(2010.01)*

(52) Classification Coopérative des Brevets (CPC):
**H01M 10/0568; H01M 4/13; H01M 4/382;**
**H01M 4/62; H01M 10/052; H01M 10/0565;**
H01M 4/136; H01M 4/405; H01M 4/5825;
H01M 2300/0085; Y02E 60/10

(86) Numéro de dépôt international:
**PCT/FR2018/052896**

(87) Numéro de publication internationale:
**WO 2019/097189 (23.05.2019 Gazette 2019/21)**

(54) **UTILISATION D'UN MÉLANGE DE SELS À TITRE D'ADDITIF DANS UNE BATTERIE AU LITHIUM GÉLIFIÉE**

VERWENDUNG EINER MISCHUNG VON SALZEN ALS ADDITIV IN EINER GELARTIGEN LITHIUMBATTERIE

USE OF A MIXTURE OF SALTS AS ADDITIVE IN A GELIFIED LITHIUM BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2017   FR 1760903**

(43) Date de publication de la demande:
**30.09.2020   Bulletin 2020/40**

(73) Titulaire: **Blue Solutions**
**29500 Ergué Gabéric (FR)**

(72) Inventeurs:
• **DESCHAMPS, Marc**
  **29000 Quimper (FR)**
• **LECUYER, Margaud**
  **29120 Combrit (FR)**
• **BOUCHET, Renaud**
  **38700 Latronche (FR)**
• **ROLLAND, Julien**
  **59000 Lille (FR)**

(74) Mandataire: **IPAZ**
**Bâtiment Platon**
**Parc Les Algorithmes**
**91190 Saint-Aubin (FR)**

(56) Documents cités:
EP-A1- 2 562 865     EP-A1- 3 206 248
US-A1- 2015 188 187     US-A1- 2015 280 277

**Description**

La présente invention se rapporte au domaine technique général des batteries au lithium.

Plus particulièrement, l'invention est relative à l'utilisation d'ions nitrates en tant que co-anions dans une batterie rechargeable gélifiée au lithium métallique ne comprenant pas d'ions polysulfures. En particulier, l'invention est relative à l'utilisation simultanée d'un premier sel comprenant un anion nitrate ($NO_3^-$) et d'un second sel comprenant un anion différent du nitrate, l'un au moins du premier et du second sel étant un sel de lithium, à titre de promoteurs de conductivité ionique dans une batterie rechargeable gélifiée au lithium métallique. L'invention est également relative à une batterie gélifiée au lithium comprenant un mélange dudit premier sel et dudit second sel, à un électrolyte gélifié non-aqueux comprenant un tel mélange et à une électrode positive pour batterie au lithium comprenant ledit mélange.

Les batteries au lithium sont particulièrement destinées aux véhicules automobiles ainsi qu'au stockage stationnaire de l'énergie électrique.

Parmi les batteries au lithium, les batteries Lithium-métal-polymère (ou LMP) sont des batteries « tout solide » se présentant généralement sous forme d'un assemblage de films minces superposés. Quatre films fonctionnels entrent dans leur composition : i) une électrode négative (anode) en lithium métallique ou en alliage de lithium assurant la fourniture des ions lithium lors de la décharge de la batterie, ii) un électrolyte polymère solide conducteur des ions lithium, iii) une électrode positive (cathode) composée d'un matériau actif d'électrode agissant comme un réceptacle où les ions lithium viennent s'intercaler, et enfin iv) un collecteur de courant en contact avec l'électrode positive permettant d'assurer la connexion électrique.

L'électrolyte polymère solide est généralement composé d'un polymère à base de poly(oxyde d'éthylène) (POE) et d'au moins un sel de lithium ; l'électrode positive est habituellement un matériau dont le potentiel de travail est inférieur à 4V vs $Li^+/Li$ tel que par exemple un oxyde de métal (comme par exemple $V_2O_5$, $LiV_3O_8$, $LiCoO_2$, $LiNi_yMn_xCo_zO_2$ (avec x+y+z=1), (par exemple les composés 1/3,1/3,1/3, et 0,6, 0,2, 0,2)), $LiNiO_2$, $LiMn_2O_4$ et $LiNi_{0.5}Mn_{0.5}O_{2...}$) ou un phosphate de type $LiMPO_4$, où M représente un cation métal sélectionné parmi le groupe Fe, Mn, Co, Ni et Ti, ou des combinaisons de ces cations, comme par exemple $LiFePO_4$, et contient également du carbone et un polymère ; et le collecteur de courant est généralement constitué d'une feuille de métal. La conductivité des ions est assurée par la dissolution du sel de lithium dans le polymère entrant dans la composition de l'électrolyte solide.

Les batteries au lithium, et particulièrement les batteries LMP, présentent un certain nombre d'avantages.

En premier lieu, la densité massique des batteries LMP est de l'ordre de 120 à 180 Wh/kg soit une densité d'énergie au minimum 2,5 fois plus élevée que les batteries au plomb de voiture thermique (30-50 Wh/kg). Les batteries LMP n'ont par ailleurs pas d'effet mémoire et il est donc inutile de les décharger complètement avant de les recharger, comme dans les cas de certaines autres technologies (Ni-Cd). Enfin, avec une tension identique à celles des batteries au Lithium-ion (de l'ordre de 3,4 V), les batteries LMP ne demandent aucun entretien et ont une durée de vie de près de 10 ans, ce qui est intéressant d'un point de vue commercial et ce qui les rend pertinentes pour des applications nécessitant des tractions électriques.

Les batteries LMP présentent néanmoins un inconvénient important. En effet, pour les utiliser, elles doivent être maintenues à une température d'environ 60-80°C, ce qui impose quasiment de les maintenir en charge en laissant le véhicule branché sur le secteur quand il ne roule pas. A défaut, les batteries LMP se vident en quelques jours de par leur maintien en température.

Une des solutions pour surmonter ce problème, est l'utilisation de batteries au lithium comportant, tout comme dans les batteries LMP, une électrode négative constituée d'une feuille de lithium métallique ou d'un alliage de lithium et une électrode positive en un matériau capable d'insérer les ions lithium, mais dans lesquelles l'électrolyte polymère est remplacé par un électrolyte gélifié (batteries lithium-métal-gel). Ces batteries présentent en effet des températures de fonctionnement plus basses que celles de batteries LMP, en particulier de l'ordre de 0 à 60°C. Cependant lors du fonctionnement de ces batteries, il se forme une mousse de lithium à la surface de l'électrode négative. Cette mousse de lithium est due à un électrodépôt de mauvaise qualité sur l'électrode négative, ce qui a pour conséquence d'affecter la durée de vie de telles batteries, en particulier, en raison d'un manque de robustesse de la couche de passivation sur la surface de l'électrode au lithium.

En effet, lors du fonctionnement de la batterie, une couche dite de passivation (connue également sous l'appellation anglophone « *Solid Electrolyte Interface* » ou SEI) se forme sur l'électrode négative. Cette couche de passivation est notamment produite par réduction de l'électrolyte à la surface de l'électrode négative dès le premier cycle de la batterie, consommant une partie des ions lithium présents dans l'électrolyte. Cette couche de passivation est indispensable au bon fonctionnement de l'électrode négative et sa qualité est déterminante pour ses performances futures et celles de la batterie la comprenant. Elle doit présenter un certain nombre de qualités : i) être suffisamment conductrice des ions lithium, ii) non conductrice des électrons et iii) présenter une bonne résistance mécanique. En effet, lorsque la qualité de la couche de passivation n'est pas suffisante, on observe une perte progressive de capacité et/ou de rendement coulombique de la batterie et une diminution de sa durée de vie.

Diverses solutions ont déjà été proposées pour améliorer la qualité de la couche de passivation dans les batteries au lithium comprenant une électrode négative au lithium métallique, en particulier l'ajout d'additifs, notamment dans la composition de l'électrolyte.

A titre d'exemple, on peut notamment mentionner l'ajout de vinylène carbonate comme décrit par exemple par H. Ota et al. (Electrochimica Acta, 2004, 49, 565-572).

Cependant, ces solutions ne sont pas entièrement satisfaisantes, en particulier parce que les sels de lithium habituellement utilisés dans les batteries au lithium restent couteux et que les cyclabilités, même en présence de tels additifs, sont limitées à moins de 100 cycles.

Il est par ailleurs connu d'utiliser du nitrate de lithium comme additif dans l'électrolyte des batteries lithium-soufre. Les batteries lithium-soufre comprennent une électrode négative à base de lithium métallique ou d'un alliage à base de lithium, une électrode positive généralement en carbone poreux et comprenant une matière active d'électrode positive à base de soufre ou d'un composé organique contenant du soufre, lesdites électrodes étant séparées par un séparateur imprégné d'un électrolyte comprenant des ions lithium en solution dans un solvant. Les batteries lithium-soufre sont un des systèmes de stockage électrochimique de l'énergie les plus prometteurs, de telles batteries pouvant atteindre théoriquement une capacité spécifique et une densité massique d'énergie élevées respectivement de 1675 mAh/g$_{soufre}$ et de 2600 Wh/kg$_{soufre}$. L'intérêt pour les batteries lithium-soufre est cependant tempéré par un certain nombre de problèmes parmi lesquels figure le problème de la navette redox (connu également sous l'appellation anglophone « *redox shuttle* ») due à la présence notamment d'ions polysulfures générés par réduction du soufre au sein de l'électrode positive. Les ions polysulfures formés à l'électrode positive sont solubles dans la majorité des électrolytes liquides. Ceux-ci migrent donc vers l'électrode négative où ils sont à nouveau réduits. Ce phénomène ralentit considérablement la charge de ce type de batteries en consommant une partie du courant pour alimenter la navette redox. Pour lutter contre ce phénomène, il a déjà été proposé, notamment par Li W. et al. (Nature Communications, DOI : 10, 1038/ncomms8436, 2015, p : 1-8), d'ajouter de petites quantités (de l'ordre de 0,15 M ou 0,75M environ) de nitrate de lithium à titre d'additif dans l'électrolyte de batteries lithium-soufre contenant un sel de lithium et des ions polysulfures afin de générer un effet synergique entre lesdits ions polysulfures et le nitrate de lithium pour former une couche de passivation stable, censée réduire le phénomène de navette redox. Cette solution n'est cependant pas transposable aux batteries ne comportant pas d'électrode positive à base de soufre et donc pas d'ions polysulfures dans l'électrolyte.

Le document EP 2 562 865 A1 divulgue un gel électrolytique comprenant un solvant non-aqueux et un composant gélifiant, le solvant comprenant un mélange de deux sels de lithium consistant en un sel principal choisi parmi LiPF$_6$, LiBF$_4$, LiClO$_4$, LiI, LiNO$_3$, LiCF$_3$SO$_3$ et LiN(CF$_3$SO$_2$)$_2$, LiN(CF$_3$CF$_2$SO$_2$)$_2$, dans une proportion massique de 70-100%, et un sel auxiliaire choisi parmi LiB(C$_2$O$_4$)$_2$ et LiBF$_2$(C$_2$O$_4$), dans une proportion massique de 0-30%, la concentration totale en sels de lithium au sein du solvant étant comprise entre 0.5 et 1.5 M.

Les inventeurs se sont donc donné pour but de proposer une solution qui permette de remédier aux problèmes rencontrés dans les batteries au lithium gélifiées. En particulier, les inventeurs se sont fixé pour but de proposer une solution qui permette d'améliorer la durée de vie des batteries au lithium gélifiées.

De façon tout à fait contre intuitive, les inventeurs ont découvert que l'utilisation à titre d'additif dans une batterie rechargeable gélifiée au lithium métallique ne comprenant pas d'ions polysulfures, d'un mélange comprenant au moins deux sels, mélange dans lequel un premier sel comprend un anion nitrate (NO$_3^-$) et un second sel comprend un anion différent du nitrate, l'un au moins du premier et du second sel étant un sel de lithium, et ce dans des

- $\alpha$, $\beta$, $\gamma$ et $\delta$ sont tels que l'électroneutralité des composés de formules M$_\alpha$(NO$_3$)$_\beta$ et M'$_\gamma$A$_\delta$ est respectée,

étant entendu que :

- le rapport molaire des sels S1 et S2 (RM$_{S1/S2}$), défini par l'équation (1) suivante $\dfrac{\beta.n_1}{\delta.n_2}$ (1), est supérieur à 1,5,

à titre de promoteurs de conductivité ionique dans une batterie rechargeable gélifiée au lithium métallique comprenant au moins une électrode positive, au moins un électrolyte non aqueux et au moins une électrode négative à base de lithium métallique ou d'un alliage de lithium, ladite électrode positive et ledit électrolyte étant l'un et/ou l'autre gélifié(s) et formant un complexe {électrolyte + électrode positive}, et ladite batterie étant exempte d'ions polysulfures.

La présence des sels S1 et S2 tels que définis ci-dessus dans ladite batterie permet, de façon avantageuse, d'en améliorer la durée de vie.

Au sens de la présente invention, on entend par complexe {électrolyte + électrode positive}, l'ensemble des éléments constituant l'électrolyte et l'électrode positive.

Selon cette utilisation, les sels S1 et S2 peuvent être présents, avant le premier cycle de charge/décharge de ladite batterie, indifféremment dans l'électrolyte et/ou dans l'électrode positive, sous réserve que le rapport molaire RM$_{si/s2}$ défini ci-dessus soit respecté.

Ainsi, les variantes suivantes constituent des formes de réalisation de ladite utilisation :

1) l'électrolyte contient au moins un sel S1 et au moins un sel S2 et l'électrode positive ne contient ni sel S1 ni sel S2, ou

2) l'électrolyte ne contient ni sel S1 ni sel S2 et l'électrode positive contient au moins un sel S1 et au moins un sel S2, ou

3) l'électrolyte contient uniquement un sel S1 et l'électrode positive contient uniquement un sel S2, ou

4) l'électrolyte contient uniquement un sel S2 et l'électrode positive contient uniquement un sel S1, ou

5) l'électrolyte et l'électrode positive contiennent chacun au moins un sel S1 et au moins un sel S2, les rapports molaires des sels S1 et S2 au sein de l'électrolyte ($RM_{S1/S2\ Electrolyte}$) et au sein de l'électrode positive ($RM_{S1/S2\ Elect.\ Positive}$) pouvant être identiques ou différents entre eux sous réserve que le rapport molaire $RM_{S1/S2}$ au sein de la batterie et tel que défini ci-dessus soit respecté, c'est-à-dire soit supérieur à 1,5, ou

6) l'électrolyte contient uniquement l'un des sels S1 et S2 et l'électrode positive contient au moins un sel S1 et au moins un sel S2, ou

7) l'électrolyte contient au moins un sel S1 et au moins un sel S2 et l'électrode positive contient uniquement l'un des sels S1 et S2.

Selon une forme de réalisation préférée de l'invention, le rapport molaire $RM_{S1/S2}$ est supérieur ou égal à 10, et encore plus préférentiellement il varie de 10 à 30.

La quantité totale en sels S1 et S2 présents au sein de ladite batterie peut également être définie en % massique. Dans ce cas, la quantité totale en sels S1 et S2 est exprimée par rapport à la masse totale du complexe comprenant l'électrolyte et l'électrode positive (complexe {électrolyte +électrode positive}) et non par rapport à la masse totale de ladite batterie.

Ainsi, selon une forme de réalisation préférée de l'invention, la masse totale en sels S1 et S2 au sein de ladite batterie varie de 0,5 à 30 % en masse, et encore plus préférentiellement de 0,5 à 15 % en masse, par rapport à la masse totale dudit complexe {électrolyte +électrode positive}.

Les cations M et M' des sels S1 et S2 peuvent notamment être choisis parmi les métaux alcalins, en particulier parmi le lithium, le sodium, le potassium, le rubidium, le césium et le francium. Bien entendu, et comme indiqué précédemment, au moins un des cations M et M' est un cation lithium.

Selon une forme de réalisation préférée de l'invention, M et M' sont tous deux des cations lithium.

Ainsi, selon une forme de réalisation préférée de l'invention, le sel S1 est le nitrate de lithium ($LiNO_3$).

L'anion A peut notamment être choisi parmi les anions triflate, perchlorate, perfluorate, hexafluorophosphate ($PF_6^-$), bis(trifluorométhanesulfonyl)imide ($TFSI^-$), bis(fluorosulfonyl)imide ($FSI^-$), bis(pentafluoroéthylsulfonyl)imide ($BETI^-$), tetrafluoroborate ($BF_4^-$), et bis(oxalato)borate.

Parmi les sels S2, on peut en particulier citer le bis(trifluorométhylsulfonyl)imide de lithium (LiTFSI) et le bis(fluorosulfonyl)imide de lithium (LiFSI), ces deux sels S2 étant particulièrement préférés selon l'invention.

Selon une forme de réalisation particulièrement préférée de l'invention, le mélange comprend du nitrate de lithium à titre de sel S1 et du LiTFSI ou du LiFSI à titre de sel S2.

Ainsi que détaillé ci-dessus pour le premier objet de l'invention, selon la variante 1) de réalisation de l'utilisation, l'électrolyte comprend au moins un sel S1 et au moins un sel S2.

L'invention fait donc référence à un électrolyte non aqueux gélifié pour batterie au lithium gélifiée, ledit électrolyte étant caractérisé en ce qu'il comprend au moins un solvant, au moins un polymère gélifiant et au moins un mélange :

i) d'un premier sel S1 de formule $M_\alpha(NO_3)_\beta$ en une concentration molaire C1 et un nombre de moles n1, et

ii) d'un second sel S2 de formule $M'_\gamma A_\delta$ en une concentration molaire C2 et un nombre de moles n2, pour lesquels :

- M et M' sont des cations organiques ou inorganiques, étant entendu que l'un au moins de M et M' est un cation lithium, et
- A est un anion,
- $\alpha$, $\beta$, $\gamma$ et $\delta$ sont tels que l'électroneutralité des composés de formules $M_\alpha(NO_3)_\beta$ et $M'_\gamma A_\delta$ est respectée,
- la concentration molaire totale [C1 + C2] en sels S1 et S2 varie de 0,5 à 10 mol/L, et

- le rapport molaire des sels S1 et S2 (RM$_{S1/S2}$), défini par l'équation (1) suivante $\frac{\beta.n_1}{\delta.n_2}$ (1), est supérieur à 1,5.

Selon une forme de réalisation préférée, la concentration molaire C1 en sel S1 dans ledit électrolyte est supérieure ou égale à 1 mol/L, et encore plus préférentiellement ladite concentration molaire C1 varie de 1,5 à 5 mol/L.

Le ou les solvants de l'électrolyte non aqueux gélifié peuvent être choisis parmi les éthers linéaires ou cycliques, les carbonates, les solvants soufrés tels que la sulfolane et le diméthylsulfoxyde, les esters linéaires ou cycliques (lactones), les nitriles, etc...

Parmi de tels solvants, on peut en particulier mentionner le diméthyléther, les diméthyléther de polyéthylène glycols (ou PEGDME) tels que le diméthyléther de tetraéthylèneglycol (TEGDME), le dioxolane, l'éthylènecarbonate (EC), le propylènecarbonate (PC), le diméthylcarbonate (DMC), le diéthylcarbonate (DEC), le méthyl-isopropyl carbonate (MiPC), l'acétate d'éthyle, l'éthylbutyrate (EB), et leurs mélanges.

De préférence, le ou les solvants représentent de 20 à 89,5 % en masse, en encore plus préférentiellement de 35 à 75 % en masse, par rapport à la masse totale de l'électrolyte non aqueux gélifié.

Le ou les polymères gélifiants de l'électrolyte non aqueux gélifié peuvent être choisis parmi les polyoléfines telles que les homopolymères ou les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, et leurs mélanges ; les polymères halogénés tels que les homopolymères et les copolymères de chlorure de vinyle, de fluorure de vinylidène (PVdF), de chlorure de vinylidène, de tetrafluorure d'éthylène, ou de chlorotrifluoroéthylène, les copolymères de fluorure de vinylidène et d'hexafluoropropylène (PVdF-co-HFP) et leurs mélanges ; les homopolymères et les copolymères de styrène et leurs mélanges ; les polymères vinyliques ; les polymères non conducteurs électroniques de type anionique tels que le poly(styrène sulfonate), le poly(acide acrylique), le poly(glutamate), l'alginate, la pectine, la carraghénane et leurs mélanges ; les polyacrylates ; l'acétate de cellulose ; les polyamides ; les polyesters ; le polyuréthane ; le polyalcool vinylique ; et l'un de leurs mélanges.

Le ou les polymères représentent de préférence de 10 à 60 % en masse, et encore plus préférentiellement de 15 à 50 % en masse, par rapport à la masse totale de la solution électrolytique non aqueuse gélifiée.

Comme indiqué précédemment, et selon la variante 2), l'électrode positive peut contenir au moins un sel S1 et au moins un sel S2, le mélange des sels S1 et S2 étant donc un ingrédient du matériau constituant l'électrode positive de la batterie avant son premier cycle de charge/décharge.

L'invention a donc pour deuxième objet une électrode composite positive gélifiée pour batterie gélifiée au lithium, ladite électrode composite étant caractérisée en ce qu'elle comprend au moins une matière active d'électrode positive capable d'insérer des ions lithium de manière réversible, au moins un liant polymère, au moins un solvant, au moins un polymère gélifiant et au moins un mélange :

i) d'un premier sel S1 de formule M$_\alpha$(NO$_3$)$_\beta$ en une concentration molaire C1 et un nombre de moles n1, et

ii) d'un second sel S2 de formule M'$_\gamma$A$_\delta$ en une concentration molaire C2 et un nombre de moles n2, pour lesquels :

- M et M' sont des cations organiques ou inorganiques, étant entendu que l'un au moins de M et M' est un cation lithium, et

- A est un anion,

- $\alpha$, $\beta$, $\gamma$ et $\delta$ sont tels que l'électroneutralité des composés de formules M$_\alpha$(NO$_3$)$_\beta$ et M'$_\gamma$A$_\delta$ est respectée,

ledit mélange étant tel que :

- la concentration molaire totale [C1 + C2] en sels S1 et S2 varie de 0,5 à 10 mol/L, et

- le rapport molaire des sels S1 et S2 (RM$_{S1/S2}$), défini par l'équation (1) suivante $\frac{\beta.n_1}{\delta.n_2}$ (1), est supérieur à 1,5.

Le ou les solvants ainsi que le ou les polymères gélifiants sont tels que définis selon le deuxième objet de l'invention.

Selon le troisième objet de l'invention le mélange des sels S1 et S2 représente de préférence de 0,5 à 10% en masse, et encore plus préférentiellement de 2 à 6 % en masse, par rapport à la masse totale de ladite électrode positive.

La matière active d'électrode positive peut notamment être choisie parmi les phosphates de fer lithiés, les oxydes de vanadium $VO_x$ ($2 \leq x \leq 2,5$), $LiV_3O_8$, $Li_yNi_{1-x}Co_xO_2$ ($0 \leq x \leq 1$ ; $0 \leq y \leq 1$), $LiNi_yMn_xCo_zO_2$ ((avec $x+y+z=1$), tels que par exemple les composés dans lesquels $x=1/3$, $y=1/3$ et $z=1/3$, ou $x=0,6$, $y=0,2$ et $z=0,2$), les spinelles de manganèse $Li_yMn_{1-x}M_xO_4$ (M = Cr, Al, V, Ni, $0 \leq x \leq 0,5$ ; $0 \leq y \leq 1$), utilisés seuls ou en mélanges.

Selon une forme de réalisation préférée de l'invention, la matière active du matériau d'électrode positive est choisie parmi les phosphates de fer lithiés, tels qu'en particulier le $LiFePO_4$.

La matière active d'électrode représente de préférence de 55 à 90 % en masse, et encore plus préférentiellement de 70 à 90 % en masse environ, par rapport à la masse totale du matériau d'électrode positive.

Le liant polymère peut être choisi parmi le PVdF, un copolymère du PVdF, le polyoxyéthylène (POE), un copolymère du POE, un polymère conducteur de type cationique, les polyoléfines telles qu'en particulier le polyéthylène, les copolymères de polyoléfines tels qu'en particulier les copolymères de polyéthylène, le polyuréthane, les polyamides, l'acétate de cellulose, les polyesters, le polyalcool vinylique et l'un de leurs mélanges.

Le liant polymère représente de préférence de 2 à 20% en masse environ, et encore plus préférentiellement de 3 à 15 % en masse, par rapport à la masse totale du matériau d'électrode positive.

L'électrode composite positive peut en outre renfermer au moins un additif de conduction électronique. Dans ce cas, un tel additif peut notamment être choisi parmi les charges carbonées telles que le noir de carbone, le graphite, les fibres et nanofibres de carbone, les nanotubes de carbone et le graphène ; les particules d'au moins un métal conducteur tel que l'aluminium, le platine, le fer, le cobalt et le nickel ; et l'un de leurs mélanges.

L'additif de conduction électronique représente de préférence de 0 à 10 % en masse, et encore plus préférentiellement de 0 à 3 % en masse, par rapport à la masse totale du matériau d'électrode positive.

Selon une forme de réalisation préférée de l'invention, l'électrode positive est déposée sur un collecteur de courant. Le collecteur de l'électrode positive est alors de préférence en aluminium, éventuellement revêtu d'une couche carbonée.

Enfin, l'invention a pour troisième objet une batterie gélifiée au lithium comprenant une électrode positive, une électrode négative à base de lithium métallique ou d'un alliage de lithium, un électrolyte disposé entre ladite électrode positive et ladite électrode négative, ladite batterie étant caractérisée en ce que :

elle est exempte d'ions polysulfures, et

elle comprend :

i) un premier sel S1 de formule $M_\alpha(NO_3)_\beta$ en un nombre de moles n1, et
ii) un second sel S2 de formule $M'_\gamma A_\delta$ en un nombre de moles n2,

pour lesquels :

- M et M'sont des cations organiques ou inorganiques, étant entendu que l'un au moins de M et M' est un cation lithium, et

- A est un anion,

- $\alpha$, $\beta$, $\gamma$ et $\delta$ sont tels que l'électroneutralité des composés de formules $M_\alpha(NO_3)_\beta$ et $M'_\gamma A_\delta$ est respectée,

- le rapport molaire des sels S1 et S2 ($RM_{S1/S2}$), défini par l'équation (1) suivante $\dfrac{\beta.n_1}{\delta.n_2}$ (1), est supérieur à 1,5,

lesdits sels S1 et S2, indépendamment l'un de l'autre, étant indifféremment présents, avant le premier cycle de charge/décharge de ladite batterie, au sein de l'électrolyte et/ou au sein de l'électrode positive,

ladite électrode positive et ledit électrolyte étant l'un et/ou l'autre gélifié(s).

Ainsi, selon l'invention, les sels S1 et S2 sont introduits avant la première charge de la batterie, soit sous forme d'un mélange dans l'électrolyte et/ou dans l'électrode positive, soit chacun des sels est introduit séparément dans l'électrolyte ou l'électrode positive de la batterie.

Selon une forme de réalisation préférée de l'invention, la quantité totale de mélange des sels S1 et S2 dans l'ensemble des éléments constituant le complexe {électrolyte + électrode positive}, varie de 0,5 à 30 % en masse, et encore plus préférentiellement de 0,5 à 15 % en masse, par rapport à la masse totale de ladite batterie.

Dans la batterie au lithium selon la présente invention, l'épaisseur des différents éléments de la batterie est en général de l'ordre de 1 à une centaine de micromètres.

La présente invention est illustrée par les exemples suivants, auxquels elle n'est cependant pas limitée.

## EXEMPLES

L'avantage d'utiliser un mélange des sels S1 et S2 tel que défini selon la présente invention dans la composition de l'électrolyte et/ou de l'électrode positive peut être mesuré par caractérisation de l'électrodépôt du lithium dans une cellule symétrique lithium/électrolyte/lithium et par suivi du cyclage de cellules complètes.

**Exemple 1** : **Mise en évidence de l'effet du mélange des sels S1 et S2 sur la qualité de l'électrodépôt de lithium**

La qualité de l'électrodépôt de lithium a pu être évaluée par cyclage en cellules symétriques lithium/électrolyte/lithium. Ces essais ont permis de caractériser la stabilité d'électrolytes non-aqueux gélifiés conformes à l'invention comparativement à un électrolyte non-aqueux gélifié ne faisant pas partie de la présente invention.

Les évaluations ont été réalisées avec du lithium métallique ; la solution électrolytique seule a été évaluée par imprégnation d'un séparateur en polyoléfine vendu sous la dénomination commerciale BPF Bolloré Porous Film par la société Bolloré.

Des solutions électrolytiques ont été préparées en utilisant du LiTFSI à titre de sel S2 (vendu par la société 3M), du LiNOs à titre de sel S1 (vendu par la société Alfa Aesar) et du diméthyléther de polyéthylène glycol (PEGDME 250 g/mol vendu par la société Sigma Aldrich). Les solutions électrolytiques ont été préparées par dissolution des sels de lithium dans le PEGDME, sous agitation magnétique à température ambiante.

Trois solutions électrolytiques A, B et C ayant la composition indiquée dans le tableau 1 ci-dessous ont été évaluées :

### TABLEAU 1

| Solutions | A (*) | B | C |
|---|---|---|---|
| PEGDME (% en masse) | 88,00 | 55,00 | 69,00 |
| LiNO$_3$ (% en masse) | 3,60 | 13,50 | 24,80 |
| LiTFSI (% en masse) | 8,40 | 31,50 | 6,20 |
| Concentration totale en sels (en mol/L) | 0,9 | 4,2 | 4,8 |
| Rapport molaire [NO$_3^-$]/[TFSI$^-$] | 1,8 | 1,8 | 16,7 |
| Concentration en NO$_3^-$ (en mol/L) | 0,6 | 2,7 | 4,5 |
| (*) solution électrolytique comparative, ne faisant pas partie de l'invention. | | | |

Seules les solutions B et C sont conformes à la présente invention. En particulier, la solution A comparative présente le même rapport molaire [NO$_3^-$]/[TFSI$^-$] que la solution B conforme à l'invention, mais une teneur en sels totale inférieure à 1 mol/L.

Trois cellules complètes ont ensuite été préparées, chacune utilisant une des solutions électrolytiques A, B ou C telles que préparées ci-dessus.

Le séparateur a été trempé dans la solution électrolytique, l'excès de solution étant ôté avec du papier absorbant puis intercalé entre deux feuilles de lithium métallique, chacune ayant une épaisseur de 50 μm. On a ainsi obtenu trois cellules, respectivement dénommées cellules A, B et C.

Les cellules ont été testées en cyclage galvanostatique (courant constant) à 40°C, à 300 μA/cm$^2$ pendant 4 heures, puis inversion du sens du courant pendant 4 heures.

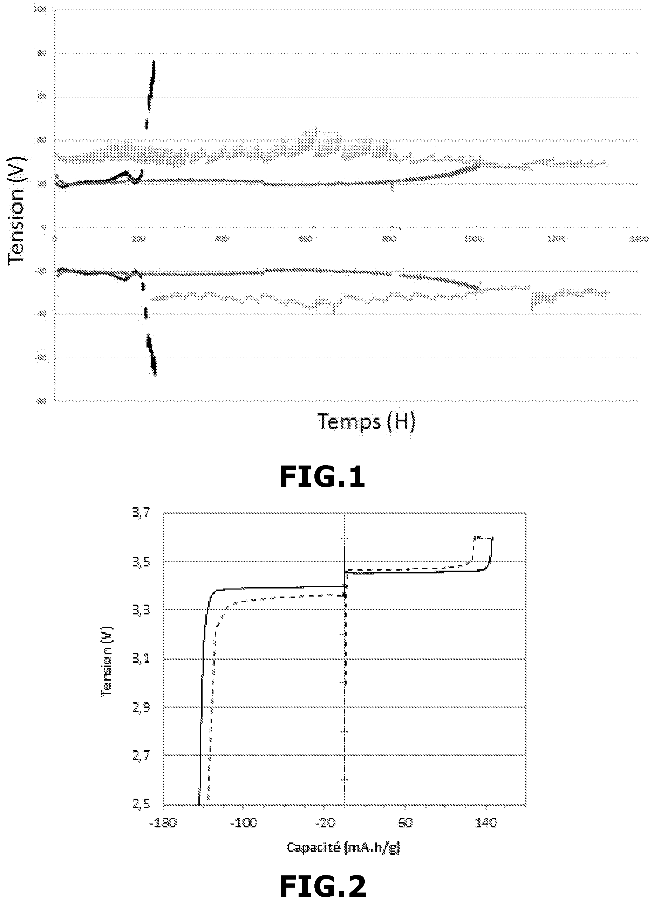

Les résultats obtenus sont reportés sur la figure 1 annexée sur laquelle l'évolution de la tension (en V) est fonction du temps en heure. Sur cette figure, la courbe en trait noir correspond à la cellule **A** comprenant la solution électrolytique **A** (cellule non conforme à l'invention), la courbe en trait gris foncé correspond à la cellule **B** comprenant la solution électrolytique **B** et la courbe en trait gris clair correspond à la cellule **C** comprenant la solution électrolytique **C.**

Ces résultats montrent la bonne stabilité de la polarisation en cyclage des cellules B et C conformes à l'invention alors que la cellule A ne faisant pas partie de l'invention présente une très mauvaise stabilité. Ces résultats montrent également que plus la concentration molaire en N0$_3^-$ est élevée, plus la polarisation est stable cycles après cycles.

**Exemple 2** : **Préparation d'une batterie au lithium gélifiée conforme à la présente invention**

On a préparé une cellule complète ayant la constitution suivante :
**Electrolyte gélifié** (selon le deuxième objet de l'invention) :

- 20 g soit 40 % en masse d'une solution comprenant 13,75% en masse de LiNOs (soit 2,45 mol/L) (Alfa Aesar) et 13,75 % en masse de LiTFSI (soit 0,59 mol/L) (société 3M) dans du diméthyléther de polyéthylène glycol (PEGDME 250 g/mol vendu par la société Aldrich) ;

- 20 g soit 40 % en masse de PVdF Solef 21510 (Solvay) ;

- 10 g soit 20 % en masse de polyoxyéthylène (POE 1L vendu par la société Sumitomo Seika).

Les différents constituants de l'électrolyte gélifié ont été mélangés dans un mélangeur vendu sous la dénomination commerciale Plastograph® par la société Brabender® à une température de 110°C. Le mélange ainsi obtenu a ensuite été laminé à 110°C sous la forme d'un film d'électrolyte gélifié ayant une épaisseur d'environ 20 $\mu$m.

L'électrolyte gélifié ainsi préparé présentait les caractéristiques résumées dans le tableau 2 ci-après :

**TABLEAU 2**

| Constituants | |
|---|---|
| PEGDME (% en masse) | 29,00 |
| LiNO$_3$ (% en masse) | 5,5 |
| LiTFSI (% en masse) | 5,5 |
| Concentration totale en sels (en mol/L) | 3,04 |
| Rapport molaire [NO$_3^-$]/[TFSI$^-$] | 4,16 |
| Concentration en NO$_3^-$ (en mol/L) | 2,45 |

**Electrode positive gélifiée** (Electrode positive gélifiée comprenant un mélange de LiNOs et de LiTFSI selon le troisième objet de l'invention) :

- 74 % en masse de LiFePO$_4$ vendu sous la dénomination commerciale LFP P600A par la société Pulead ;

- 16 % en masse d'une solution électrolytique comprenant 13,75 % en masse (soit 2,45 mol/L) de LiNOs (Alfa Aesar) et 13,75 % en masse (soit 0,49 mol/L) de LiTFSI (société 3M) dans du diméthyléther de polyéthylène glycol (PEGDME 250 g/mol vendu par la société Aldrich) ;

- 8 % en masse de polyoxyde d'éthylène (POE 1L vendu par la société Sumitomo) ;

- 2 % en masse de noir de carbone vendu sous la dénomination commerciale Ketjenblack® EC600JD par la société Akzo Nobel.

Les différents constituants de l'électrode positive ont été mélangés dans un mélangeur vendu sous la dénomination commerciale Plastograph® par la société Brabender® à une température de 110°C. Le mélange ainsi obtenu a ensuite été laminé à 80°C sous la forme d'un film d'électrode positive gélifiée ayant une épaisseur d'environ 30 $\mu$m.

**Assemblage des cellules** :

Un feuillard de lithium métallique d'une épaisseur de 50 $\mu$m a été utilisé comme électrode négative.

Un collecteur de courant en aluminium comportant un revêtement carboné (Armor) a été utilisé comme collecteur de courant pour l'électrode positive. Les différentes couches Lithium/électrolyte gélifié/électrode positive gélifiée/collecteur ont été laminées sous 5 bars de pression à une température de 80°C pour fabriquer la batterie. Le laminage a été réalisé sous atmosphère contrôlée (point de rosée - 40°C).

Les cellules ainsi préparées ont ensuite été emprisonnées dans un emballage étanche thermoscellable pour les protéger de l'humidité.

La batterie ainsi préparée a été testée en cyclage galvanostatique (courant constant) à 40°C. Le premier cycle a été effectué à C/10 (charge en 10 heures) et D/10 (décharge en 10 heures) et les cycles suivants à C/4 (charge en 4 heures) et D/2 (décharge en 2 heures).

Le profil de tension (en V) en fonction de la capacité de décharge de la batterie (en mA.h/g) est reporté sur la figure 2 annexée. Sur cette figure la courbe en trait continu correspond au cycle 1 (C/10 ; D/10) et la courbe en trait pointillé correspond au cycle 2 (C/4 ; D/2).

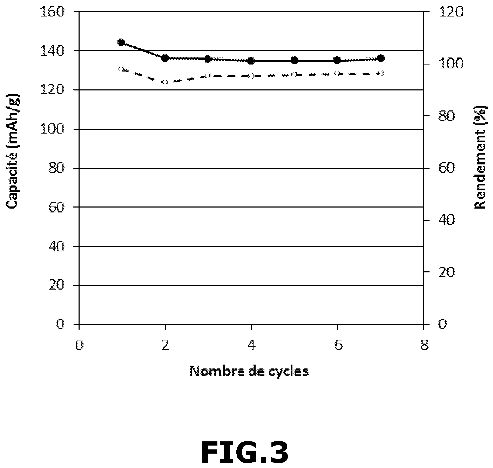

L'évolution de la capacité de décharge de la batterie (en mAh/g) et du rendement coulombique (en %) en fonction du nombre de cycles est reportée sur la figure 3 annexée. Sur cette figure, la courbe avec les ronds pleins et le trait plein correspond à la capacité de décharge et la courbe avec les ronds vides et le trait discontinu correspond au rendement coulombique.

Il ressort de ces résultats que le profil de tension montre une polarisation faible en cyclage traduisant de bonnes cinétiques au sein de la batterie. Par ailleurs, la capacité et le rendement sont stables ce qui traduit une bonne réversibilité du processus électrochimique.

## Revendications

1. Utilisation simultanée :

    i) d'un premier sel S1 de formule $M_\alpha(NO_3)_\beta$ en un nombre de moles n1,
    ii) d'un second sel S2 de formule $M'_\gamma A_\delta$ en un nombre de moles n2,

       pour lesquels :

          - M et M' sont des cations organiques ou inorganiques, étant entendu que l'un au moins de M et M' est un cation lithium, et
          - A est un anion,
          - $\alpha$, $\beta$, $\gamma$ et $\delta$ sont tels que l'électroneutralité des composés de formules $M_\alpha(NO_3)_\beta$ et $M'_\gamma A_\delta$ est respectée,

       étant entendu que :

          - le rapport molaire des sels S1 et S2 ($RM_{S1/S2}$), défini par l'équation (1) suivante $\dfrac{\beta . n_1}{\delta . n_2}$ (1), est supérieur à 1,5,

       à titre de promoteurs de conductivité ionique dans une batterie rechargeable gélifiée au lithium métallique comprenant au moins une électrode positive, au moins un électrolyte non aqueux et au moins une électrode négative à base de lithium métallique ou d'un alliage de lithium, ladite électrode positive et ledit électrolyte étant l'un et/ou l'autre gélifié(s) et formant un complexe {électrolyte + électrode positive}, et ladite batterie étant exempte d'ions polysulfures.

2. Utilisation selon la revendication 1, **caractérisée en ce que** :

    1) l'électrolyte contient au moins un sel S1 et au moins un sel S2 et l'électrode positive ne contient ni sel S1 ni sel S2, ou
    2) l'électrolyte ne contient ni sel S1 ni sel S2 et l'électrode positive contient au moins un sel S1 et au moins un sel S2, ou
    3) l'électrolyte contient uniquement un sel S1 et l'électrode positive contient uniquement un sel S2, ou
    4) l'électrolyte contient uniquement un sel S2 et l'électrode positive contient uniquement un sel S1, ou
    5) l'électrolyte et l'électrode positive contiennent chacun au moins un sel S1 et au moins un sel S2, les rapports molaires des sels S1 et S2 au sein de l'électrolyte ($RM_{S1/S2\ Electrolyte}$) et au sein de l'électrode positive ($RM_{S1/S2\ Elect.\ Positive}$) pouvant être identiques ou différents entre eux sous réserve que le rapport molaire $RM_{S1/S2}$ au sein de la batterie soit supérieur à 1,5, ou
    6) l'électrolyte contient uniquement l'un des sels S1 et S2 et l'électrode positive contient au moins un sel S1 et au moins un sel S2, ou
    7) l'électrolyte contient au moins un sel S1 et au moins un sel S2 et l'électrode positive contient uniquement l'un des sels S1 et S2.

3. Utilisation selon la revendication 1 ou 2, **caractérisée en ce que** le rapport molaire $RM_{S1/S2}$ est supérieur ou égal à 10.

4. Utilisation selon l'une quelconque des revendications 1 à 3, **caractérisée en ce que** la teneur totale en sels S1 et S2 varie de 0,5% à 30% en masse, par rapport à la masse dudit complexe {électrolyte + électrode positive}.

5. Utilisation selon l'une quelconque des revendications 1 à 4, **caractérisée en ce que** les cations M et M' des sels S1 et S2 sont choisis parmi les métaux alcalins.

6. Utilisation selon la revendication 5, **caractérisée en ce que** les métaux alcalins sont choisis parmi le lithium, le sodium, le potassium, le rubidium, le césium et le francium.

7. Utilisation selon l'une quelconque des revendications 1 à 6, **caractérisée en ce que** M et M' sont tous deux des cations lithium.

8. Utilisation selon l'une quelconque des revendications 1 à 7, **caractérisée en ce que** le sel S1 est le nitrate de lithium.

9. Utilisation selon l'une quelconque des revendications 1 à 8, **caractérisée en ce que** l'anion A est choisi parmi les anions triflate, perchlorate, perfluorate, bis(trifluorométhanesulfonyl)imide, bis(fluorosulfonyl)imide, bis(pentafluoroéthylsulfonyl)imide, tetrafluoroborate et bis(oxalato)borate.

10. Utilisation selon l'une quelconque des revendications 1 à 9, **caractérisée en ce que** le sel S2 est choisi parmi le bis(trifluorométhylsulfonyl)imide de lithium et le bis(fluorosulfonyl)imide de lithium.

11. Utilisation selon l'une quelconque des revendications 1 à 10, **caractérisée en ce que** le mélange comprend du nitrate de lithium à titre de sel S1 et du bis(trifluorométhylsulfonyl)imide de lithium ou du bis(fluorosulfonyl)imide de lithium à titre de sel S2.

12. Electrode composite positive gélifiée pour batterie gélifiée au lithium, ladite électrode composite étant **caractérisée en ce qu'**elle comprend au moins une matière active d'électrode positive capable d'insérer des ions lithium de manière réversible, au moins un liant polymère, au moins un solvant, au moins un polymère gélifiant et au moins un mélange :

i) d'un premier sel S1 de formule $M_\alpha(NO_3)_\beta$ en une concentration molaire C1 et un nombre de moles n1 et, et
ii) d'un second sel S2 de formule $M'_\gamma A_\delta$ en une concentration molaire C2 et un nombre de moles n2 et, pour lesquels :

- M et M' sont des cations organiques ou inorganiques, étant entendu que l'un au moins de M et M' est un cation lithium, et
- A est un anion,
- $\alpha$, $\beta$, $\gamma$ et $\delta$ sont tels que l'électroneutralité des composés de formules $M_\alpha(NO_3)_\beta$ et $M'_\gamma A_\delta$ est respectée,

ledit mélange étant tel que :

- la concentration molaire totale [C1 + C2] en sels S1 et S2 varie de 0,5 à 10 mol/L, et

- le rapport molaire des sels S1 et S2 ($RM_{S1/S2}$), défini par l'équation (1) suivante $\dfrac{\beta.n_1}{\delta.n_2}$ (1), est supérieur à 1,5.

13. Electrode selon la revendication 12, **caractérisée en ce que** le mélange des sels S1 et S2 représente de 0,5 à 10 % en masse, par rapport à la masse totale de ladite électrode positive.

14. Electrode selon l'une quelconque des revendications 12 à 13, **caractérisée en ce que** la matière active d'électrode positive est choisie parmi les phosphates de fer lithiés.

15. Batterie gélifiée au lithium comprenant une électrode positive, une électrode négative à base de lithium métallique ou d'un alliage de lithium, un électrolyte disposé entre ladite électrode positive et ladite électrode négative, ladite batterie étant **caractérisée en ce que** :

elle est exempte d'ions polysulfures, et
elle comprend :

i) un premier sel S1 de formule $M_\alpha(NO_3)_\beta$ en un nombre de moles n1, et
ii) un second sel S2 de formule $M'_\gamma A_\delta$ en un nombre de moles n2,

pour lesquels :

- M et M' sont des cations organiques ou inorganiques, étant entendu que l'un au moins de M et M' est un cation lithium, et
- A est un anion,
- $\alpha$, $\beta$, $\gamma$ et $\delta$ sont tels que l'électroneutralité des composés de formules $M_\alpha(NO_3)_\beta$ et $M'_\gamma A_\delta$ est respectée,
- le rapport molaire des sels S1 et S2 (RM$_{S1/S2}$), défini par l'équation (1) suivante $\dfrac{\beta.n_1}{\delta.n_2}$ (1), est supérieur à 1,5,

lesdits sels S1 et S2, indépendamment l'un de l'autre, étant indifféremment présents, avant le premier cycle de charge/décharge de ladite batterie, au sein de l'électrolyte et/ou au sein de l'électrode positive, ladite électrode positive et ledit électrolyte étant l'un et/ou l'autre gélifié(s).

## Patentansprüche

1. Gleichzeitige Verwendung:

i) eines ersten Salzes S1 der Formel $M_\alpha(NO_3)_\beta$ in einer Anzahl von Molen n1,
ii) eines zweiten Salzes S2 der Formel $M'_\gamma A_\delta$ in einer Anzahl von Molen n2, für die:

- M und M' organische oder anorganische Kationen sind, wobei es sich versteht, dass mindestens eines von M und M' ein Lithiumkation ist und
- A ein Anion ist,
- $\alpha$, $\beta$, $\gamma$ und $\delta$ so ausgelegt sind, dass die Elektroneutralität der Verbindungen der Formeln $M_\alpha(NO_3)_\beta$ und $M'_\gamma A_\delta$ respektiert wird,

wobei es sich versteht, dass:

- das Molverhältnis der Salze S1 und S2 (RM$_{S1/S2}$), das durch die folgende Gleichung (1) $\dfrac{\beta.n_1}{\delta.n_2}$ (1) definiert ist, größer als 1,5 ist,

als Ionenleitfähigkeitsverstärker in einer wiederaufladbaren gelierten Lithium-Metall-Batterie, umfassend mindestens eine positive Elektrode, mindestens einen nicht wässrigen Elektrolyt und mindestens eine negative Elektrode auf Basis metallischen Lithiums oder einer Lithiumlegierung, wobei die positive Elektrode und/oder der Elektrolyt geliert sind/ist und einen Komplex von {Elektrolyt + positive Elektrode} ausbilden, und die Batterie frei von Polysulfidionen ist.

2. Verwendung nach Anspruch 1, **dadurch gekennzeichnet, dass:**

1) der Elektrolyt mindestens ein Salz S1 und mindestens ein Salz S2 enthält und die positive Elektrode weder das Salz S1 noch das Salz S2 enthält oder
2) der Elektrolyt weder das Salz S1 noch das Salz S2 enthält und die positive Elektrode mindestens ein Salz S1 und mindestens ein Salz S2 enthält oder
3) der Elektrolyt einzig ein Salz S1 enthält und die positive Elektrode einzig ein Salz S2 enthält oder

4) der Elektrolyt einzig ein Salz S2 enthält und die positive Elektrode einzig ein Salz S1 enthält oder

5) der Elektrolyt und die positive Elektrode jeweils mindestens ein Salz S1 und mindestens ein Salz S2 enthalten, wobei die Molverhältnisse der Salze S1 und S2 in dem Elektrolyt ($RM_{S1/S2\ Electrolyte}$) und in der positiven Elektrode ($RM_{S1/S2\ positive\ Elektrode}$) identisch oder verschieden voneinander sein können, vorbehaltlich dessen, dass das Molverhältnis $RM_{S1/S2}$ in der Batterie größer als 1,5 ist, oder

6) der Elektrolyt einzig eines der Salze S1 oder S2 ist und die positive Elektrode mindestens ein Salz S1 und mindestens ein Salz S2 enthält oder

7) der Elektrolyt mindestens ein Salz S1 und mindestens ein Salz S2 enthält und die positive Elektrode einzig eines der Salze S1 und S2 enthält.

3. Verwendung nach Anspruch 1 oder 2, **dadurch gekennzeichnet, dass** das Molverhältnis $RM_{S1/S2}$ größer als oder gleich 10 ist.

4. Verwendung nach einem der Ansprüche 1 bis 3, **dadurch gekennzeichnet, dass** der Gesamtgehalt an den Salzen S1 und S2 von 0,5 % bis 30 Masse-%, relativ zu der Masse des Komplexes {Elektrolyt + positive Elektrode}, variiert.

5. Verwendung nach einem der Ansprüche 1 bis 4, **dadurch gekennzeichnet, dass** die Kationen M und M' der Salze S1 und S2 aus den Alkalimetallen ausgewählt sind.

6. Verwendung nach Anspruch 5, **dadurch gekennzeichnet, dass** die Alkalimetalle aus Lithium, Natrium, Kalium, Rubidium, Cäsium und Francium ausgewählt sind.

7. Verwendung nach einem der Ansprüche 1 bis 6, **dadurch gekennzeichnet, dass** M und M' beide Lithiumkationen sind.

8. Verwendung nach einem der Ansprüche 1 bis 7, **dadurch gekennzeichnet, dass** das Salz S1 Lithiumnitrat ist.

9. Verwendung nach einem der Ansprüche 1 bis 8, **dadurch gekennzeichnet, dass** das Anion A aus Triflat-, Perchlorat-, Perfluorat-, Bis(trifluormethansulfonyl)imid-, Bis(fluorsulfonyl)imid-, Bis(pentafluorethylsulfonyl)imid-, Tetrafluorborat- und Bis(oxalat)boratanionen ausgewählt ist.

10. Verwendung nach einem der Ansprüche 1 bis 9, **dadurch gekennzeichnet, dass** das Salz S2 aus Lithium-bis(trifluormethylsulfonyl)imid und Lithium-bis(fluorsulfonyl)imid ausgewählt ist.

11. Verwendung nach einem der Ansprüche 1 bis 10, **dadurch gekennzeichnet, dass** die Mischung Lithiumnitrat als Salz S1 und Lithium-bis(trifluormethylsulfonyl)imid oder Lithium-bis(fluorsulfonyl)imid als Salz S2 umfasst.

12. Gelierte positive Verbundelektrode für eine gelierte Lithiumbatterie, wobei die Verbundelektrode **dadurch gekennzeichnet ist, dass** sie mindestens eine aktive positive Elektroden-Materie, die fähig ist, Lithiumionen reversibel einzuführen, mindestens ein Polymerbindemittel, mindestens ein Lösungsmittel, mindestens ein gelbildendes Polymer und mindestens eine Mischung umfasst aus:

i) einem ersten Salz S1 der Formel $M_{\alpha}(NO_3)_{\beta}$ in einer Molkonzentration C1 und einer Anzahl von Molen n1 und

ii) einem zweiten Salz S2 der Formel $M'_{\gamma}A_{\delta}$ in einer Molkonzentration C2 und einer Anzahl von Molen n2 und für die:

- M und M' organische oder anorganische Kationen sind, wobei es sich versteht, dass mindestens eines von M und M' ein Lithiumkation ist und

- A ein Anion ist,

- $\alpha$, $\beta$, $\gamma$ und $\delta$ diejenigen sind, bei denen die Elektroneutralität der Verbindungen der Formeln $M_{\alpha}(NO_3)_{\beta}$ und $M'_{\gamma}A_{\delta}$ respektiert wird,

wobei die Mischung so ausgelegt ist, dass:

- die Gesamtmolkonzentration [C1 + C2] an den Salzen S1 und S2 von 0,5 bis 10 mol/l variiert und

- das Molverhältnis der Salze S1 und S2 ($RM_{S1/S2}$), das durch die folgende Gleichung (1) $\frac{\beta.n_1}{\delta.n_2}$ (1) definiert ist, größer als 1,5 ist.

13. Elektrode nach Anspruch 12, **dadurch gekennzeichnet, dass** die Mischung der Salze S1 und S2 von 0,5 bis 10 Masse-%, relativ zu der Gesamtmasse der positiven Elektrode, darstellt.

14. Elektrode nach einem der Ansprüche 12 bis 13, **dadurch gekennzeichnet, dass** die aktive positive Eletroden-Materie aus lithiierten Eisenphosphaten ausgewählt ist.

15. Gelierte Lithiumbatterie, umfassend eine positive Elektrode, eine negative Elektrode auf Basis metallischen Lithiums oder einer Lithiumlegierung, einen Elektrolyt, der zwischen der positiven Elektrode und der negativen Elektrode angeordnet ist, wobei die Batterie **dadurch gekennzeichnet ist, dass:**

sie frei von Polysulfidionen ist und
sie umfasst.

i) ein erstes Salz S1 der Formel $M_\alpha(NO_3)_\beta$ in einer Anzahl von Molen n1 und
ii) ein zweites Salz S2 der Formel $M'_\gamma A_\delta$ in einer Anzahl von Molen n2, für die:

- M und M' organische oder anorganische Kationen sind, wobei es sich versteht, dass mindestens eines von M und M' ein Lithiumkation ist und
- A ein Anion ist,
- $\alpha$, $\beta$, $\gamma$ und $\delta$ so ausgelegt sind, dass die Elektroneutralität der Verbindungen der Formeln $M_\alpha(NO_3)_\beta$ und $M'_\gamma A_\delta$ respektiert wird,

- das Molverhältnis der Salze S1 und S2 ($RM_{S1/S2}$), das durch die folgende Gleichung (1) $\frac{\beta.n_1}{\delta.n_2}$ (1) definiert ist, größer als 1,5 ist,

wobei die Salze S1 und S2 unabhängig voneinander gleichermaßen, vor dem ersten Auflade-/Entladezyklus der Batterie, in dem Elektrolyt und/oder in der positiven Elektrode, vorhanden sind,
wobei die positive Elektrode und/oder der Elektrolyte geliert sind/ist.

**Claims**

1. A simultaneous use of:

i) a first salt S1 of the formula $M_\alpha(NO_3)_\beta$ in a molar number n1,
ii) a second salt S2 of the formula $M'_\gamma A_\delta$ in a molar number n2,

for which:

- M and M' are organic or inorganic cations, it being understood that at least one of M and M' is a lithium cation, and
- A is an anion,
- $\alpha$, $\beta$, $\gamma$ and $\delta$ are such that the electroneutrality of compounds of the formulae $M_\alpha(NO_3)_\beta$ and $M'_\gamma A_\delta$ is respected,

it being understood that:

- the molar ratio of salts S1 and S2 ($RM_{S1/S2}$), defined by the following equation (1) $\frac{\beta.n_1}{\delta.n_2}$ (1), is greater than 1.5,

as ion conductivity promoters in a rechargeable lithium-metal-gel battery comprising at least one positive electrode, at least one non-aqueous electrolyte and at least one negative electrode based on lithium metal or a lithium alloy, said positive electrode and said electrolyte being one or both gel and forming an {electrolyte + positive electrode} complex, and said battery being free of polysulfide ions.

2. The use as claimed in claim 1, **characterized in that**:

1) the electrolyte contains at least one salt S1 and at least one salt S2 and the positive electrode contains neither salt S1 nor salt S2, or
2) the electrolyte contains neither salt S1 nor salt S2 and the positive electrode contains at least one salt S1 and at least one salt S2, or
3) the electrolyte contains only one salt S1 and the positive electrode contains only one salt S2, or
4) the electrolyte contains only one salt S2 and the positive electrode contains only one salt S1, or
5) the electrolyte and the positive electrode each contain at least one salt S1 and at least one salt S2, the molar ratios of the salts S1 and S2 within the electrolyte ($RM_{S1/S2\,Electrolyte}$) and within the positive electrode ($RM_{S1/S2\,Elect.\,Positive}$) which may be identical or different from one another provided that the molar ratio $RM_{S1/S2}$ within the battery is greater than 1.5, or
6) the electrolyte contains only one of the salts S1 and S2 and the positive electrode contains at least one salt S1 and at least one salt S2, or
7) the electrolyte contains at least one salt S1 and at least one salt S2 and the positive electrode contains only one of the salts S1 and S2.

3. The use as claimed in claim 1 or 2, **characterized in that** the molar ratio $RM_{S1/S2}$ is greater than or equal to 10.

4. The use as claimed in any one of claims 1 to 3, **characterized in that** the total content of salts S1 and S2 varies from 0.5 to 30 mass%, based on the mass of said {electrolyte + positive electrode} complex.

5. The use as claimed in any one of claims 1 to 4, **characterized in that** the cations M and M' of the salts S1 and S2 are selected from alkali metals.

6. The use as claimed in claim 5, **characterized in that** the alkali metals are selected from lithium, sodium, potassium, rubidium, cesium and francium.

7. The use as claimed in any one of claims 1 to 6, **characterized in that** M and M' are both lithium cations.

8. The use as claimed in any one of claims 1 to 7, **characterized in that** the salt S1 is lithium nitrate.

9. The use as claimed in any one of claims 1 to 8, **characterized in that** the anion A is selected from triflate, perchlorate, perfluorate, bis(trifluoromethanesulfonyl)imide, bis(fluorosulfonyl)imide, bis(pentafluoroethylsulfonyl)imide, tetrafluoroborate and bis(oxalato)borate.

10. The use as claimed in any one of claims 1 to 9, **characterized in that** the salt S2 is selected from lithium bis(trifluoromethylsulfonyl)imide and lithium bis(fluorosulfonyl)imide.

11. The use as claimed in any one of claims 1 to 10, **characterized in that** the mixture comprises lithium nitrate as salt S1 and lithium bis(trifluoromethylsulfonyl)imide or lithium bis(fluorosulfonyl)imide as salt S2.

12. A composite gel positive electrode for a lithium-gel battery, said composite electrode being **characterized in that** it comprises at least one positive electrode active material capable of reversibly inserting lithium ions, at least one polymer binder, at least one solvent, at least one gelling polymer and at least one mixture of:

i) a first salt S1 of the formula $M_\alpha(NO_3)_\beta$ in a molar concentration C1 and a molar number n1, and

ii) a second salt S2 of the formula $M'_\gamma A_\delta$ in a molar concentration C2 and a molar number n2 and, for which:

- M and M' are organic or inorganic cations, it being understood that at least one of M and M' is a lithium cation, and
- A is an anion,
- $\alpha$, $\beta$, $\gamma$ and $\delta$ are such that the electroneutrality of compounds of the formulae $M_\alpha(NO_3)_\beta$ and $M'_\gamma A_\delta$ is respected,

said mixture being such that:

- the total molar concentration [C1 + C2] of salts S1 and S2 varies from 0.5 to 10 mol/L, and
- the molar ratio of salts S1 and S2 ($RM_{S1/S2}$), defined by the following equation (1) $\dfrac{\beta.n_1}{\delta.n_2}$ (1), is greater than 1.5.

13. The electrode as claimed in claim 12, **characterized in that** the mixture of salts S1 and S2 is 0.5 to 10 mass %, based on the total weight of said positive electrode.

14. The electrode as claimed in claim 12 or 13, **characterized in that** the positive electrode active material is selected from lithium iron phosphates.

15. A lithium-gel battery comprising a positive electrode, a negative electrode based on lithium metal or a lithium alloy, an electrolyte disposed between said positive electrode and said negative electrode, said battery being **characterized in that**:

it is free of polysulfide ions, and
it comprises:

i) a first salt S1 of the formula $M_\alpha(NO_3)_\beta$ in a molar number n1, and
ii) a second salt S2 of the formula $M'_\gamma A_\delta$ in a molar number n2,

for which:

- M and M' are organic or inorganic cations, it being understood that at least one of M and M' is a lithium cation, and
- A is an anion,
- $\alpha$, $\beta$, $\gamma$ and $\delta$ are such that the electroneutrality of compounds of the formulae $M_\alpha(NO_3)_\beta$ and $M'_\gamma A_\delta$ is respected,

- the molar ratio of salts S1 and S2 ($RM_{S1/S2}$), defined by the following equation (1) $\dfrac{\beta.n_1}{\delta.n_2}$ (1), is greater than 1.5,

said salts S1 and S2, independently of each other, being indifferently present, before the first charge/discharge cycle of said battery, within the electrolyte and/or within the positive electrode,
one and/or the other of said positive electrode and said electrolyte being gel.

**FIG.1**

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2562865 A1

**Littérature non-brevet citée dans la description**

- **H. OTA et al.** *Electrochimica Acta,* 2004, vol. 49, 565-572

- **LI W. et al.** *Nature Communications,* 2015, 1-8